# DEMANDE DE BREVET EUROPEEN

(11) **EP 2 509 161 A1**
(43) Date de publication de la demande: **10.10.2012**
(21) Numéro de dépôt: 12158995.6
(22) Date de dépôt: 12.03.2012
(51) Int. Cl.: H01R 4/24, H01R 9/24

(54) **Dispositif de connexion de paires de conducteurs**

(30) Priorité: 08.04.2011 FR 1153073
(71) Demandeur: Nexans, 75008 Paris (FR)
(72) Inventeur: Philips, Guillaume, 08300 SAULT-LES-RETHEL (FR); Quinquis, Jean-Philippe, 08200 SEDAN (FR)
(74) Mandataire: Gauer, Pierre

(57) **Abrégé**

L'invention a pour objet un dispositif (1) de connexion de paires de conducteurs, comprenant une premier ensemble de zones de réception de paires de conducteurs et un deuxième ensemble de zones de réception de paires de conducteurs, ainsi que des moyens de liaison (3) aptes à relier chaque zone de réception du premier ensemble à une zone de réception du deuxième ensemble, caractérisé en ce que le dispositif (1) comprend des poussoirs (2) munis chacun d'une zone de réception de paires de conducteurs, les poussoirs (2) pouvant être en position fermée ou en position ouverte, les poussoirs (2) étant aptes à connecter leur zone de réception aux moyens de liaison (3) lorsqu'ils sont en position fermée et aptes à déconnecter leur zone de réception des moyens de liaison (3) lorsqu'ils sont en position ouverte, et en ce que le passage de la position ouverte à la position fermée s'effectue par rotation puis par translation des poussoirs (2).

## Description

La présente invention a pour objet un dispositif de connexion de paires de conducteurs. Elle s'applique tout particulièrement aux armoires de répartition ou baies de brassage.

Les réseaux de télécommunication sont constitués de câbles interconnectés qui permettent de desservir des abonnés. Les câbles comprennent de nombreuses paires de conducteurs, généralement du cuivre, de faible diamètre, et peuvent être aériens ou souterrains.

Les connexions peuvent être réalisées à l'aide de dispositifs de connexion reliant une première série de paires de conducteurs à une deuxième série de paires de conducteurs. Ces dispositifs peuvent comprendre des poussoirs, qui sont des éléments permettant de connecter sans outils un ou plusieurs conducteurs lorsqu'ils sont en position fermée et permettant de déconnecter ce ou ces conducteurs lorsqu'ils sont en position ouverte.

Il est connu d'utiliser des poussoirs à une seule entrée de conducteur. De tels poussoirs ont pour inconvénients de doubler la durée de connexion d'une paire de conducteurs et d'être peu denses.

Il est également connu d'utiliser des poussoirs à deux entrées de conducteur, les poussoirs étant amovibles en translation. Ces poussoirs ne permettent pas de visualiser correctement les entrées de conducteurs, ce qui rend également plus longue la durée de connexion.

Il est également connu du document EP 0 669 676 une cage qui est guidée simultanément en rotation et en translation. Ce dispositif est toutefois volumineux.

La présente invention vise à remédier à ces inconvénients.

Elle propose en particulier un dispositif de connexion de paires de conducteurs permettant de connecter rapidement les paires de conducteurs.

L'invention a ainsi pour objet un dispositif de connexion de paires de conducteurs, comprenant un premier ensemble de zones de réception de paires de conducteurs et un deuxième ensemble de zones de réception de paires de conducteurs, ainsi que des moyens de liaison aptes à relier chaque zone de réception du premier ensemble à une zone de réception du deuxième ensemble.

Le dispositif selon l'invention comprend des poussoirs munis chacun d'une zone de réception de paires de conducteurs, les poussoirs pouvant être en position fermée ou en position ouverte, les poussoirs étant aptes à connecter leur zone de réception aux moyens de liaison lorsqu'ils sont en position fermée et aptes à déconnecter leur zone de réception des moyens de liaison lorsqu'ils sont en position ouverte, le passage de la position ouverte à la position fermée s'effectuant par rotation puis par translation des poussoirs.

Ainsi, le passage de la position ouverte à la position fermée des poussoirs s'effectue par rotation puis par translation, et non pas par un guidage simultané en rotation et en translation, comme c'est le cas dans le document EP 0 669 676. Ce passage spécifique selon l'invention permet de connecter les paires de conducteurs dans un espace réduit.

La connexion des zones de réception aux moyens de liaison peut s'effectuer par translation des poussoirs.

La position ouverte des poussoirs est avantageusement une position basculée, inclinée et surélevée par rapport à la position fermée des poussoirs.

Les zones de réception des poussoirs peuvent appartenir au premier ensemble et/ou au deuxième ensemble.

Les poussoirs peuvent être alignés suivant un axe longitudinal du dispositif et le passage de la position ouverte à la position fermée peut s'effectuer par rotation des poussoirs autour d'un axe parallèle à l'axe longitudinal puis par translation des poussoirs radialement à l'axe longitudinal.

Les moyens de liaison peuvent être des contacts auto-dénudant.

Les poussoirs peuvent comprendre des moyens de guidage des conducteurs vers les zones de réception.

Les moyens de guidage peuvent comprendre deux entrées de conducteurs situées à deux niveaux différents, notamment de manière à ce que les conducteurs soient connectés successivement.

L'invention a également pour objet une armoire, par exemple une armoire extérieure, une armoire de répartition ou de sous-répartition, comprenant au moins un dispositif décrit ci-dessus.

D'autres caractéristiques et avantages de la présente invention apparaîtront plus clairement à la lumière de la description suivante donnée à titre d'exemple illustratif et non limitatif et faite en référence aux dessins annexés sur lesquels :
- la figure 1 illustre un dispositif de connexion de paires de conducteurs selon l'invention, et
- la figure 2 est une vue de détail du dispositif.

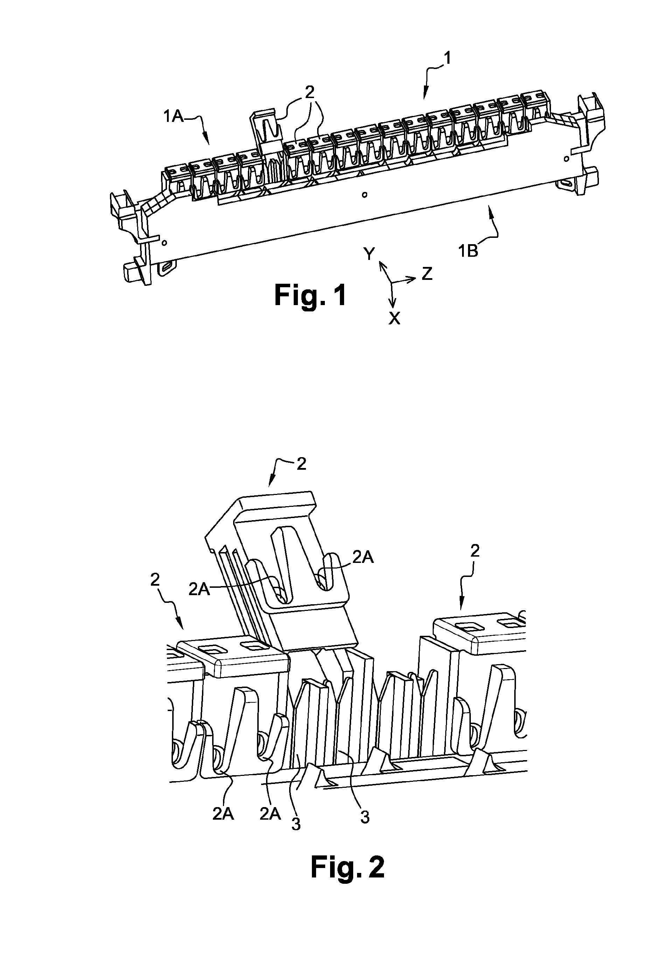

Le dispositif 1 de connexion de paires de conducteurs, tel qu'illustré à la figure 1, comprend une face avant 1A de connexion comprenant un ensemble de poussoirs 2, ainsi qu'une face arrière 1B de connexion. La face avant 1A et la face arrière 1B sont munies de contacts sur lesquels on vient connecter des paires de conducteurs issues de câbles. Les contacts des faces avant 1A et arrière 1B sont reliés entre eux à l'aide de moyens de liaison. Le dispositif 1 est typiquement une réglette de connexion.

La face avant 1A peut par exemple être connectée à des jarretières du côté d'un ou plusieurs utilisateurs. La face arrière 1B peut par exemple être destinée à la connexion de câbles du côté d'un réseau téléphonique.

Lorsque le dispositif 1 est disposé par exemple dans une armoire de rue, de la condensation, du givre ou de l'humidité peuvent provoquer une entrée d'eau dans l'armoire. Pour protéger les contacts de l'humidité au niveau de la face avant 1A, on peut disposer un gel ou une graisse à l'intérieur des poussoirs 2. Les contacts situés du côté de la face arrière 1B peuvent être des poussoirs, dans lesquels on dispose un gel, ou bien des contacts à nu sur lesquels on raccorde les paires de conducteurs à l'aide d'outils de raccordement. Dans ce cas, les contacts sont recouverts d'un capot en matière plastique rempli de gel ou de graisse pour assurer l'étanchéité.

La suite de la description est consacrée au fonctionnement des poussoirs 2, qui sont illustrés en détails à la figure 2.

Les poussoirs 2 permettent d'intervenir régulièrement sans outils. Ils assurent une connexion fiable. Chaque poussoir 2 comprend deux logements traversant le poussoir 2 ainsi que deux entrées de guidage 2A en forme de V destinées à recevoir et guider les conducteurs vers les logements. Les poussoirs 2 peuvent être en position haute ouverte et basculée, comme le poussoir 2 au centre de la figure 2, ou en position basse fermée, comme les poussoirs 2 qui l'entourent.

Lorsque le poussoir 2 est en position basculée, la paire de conducteurs est déconnectée du dispositif 1 et la ligne est coupée. Un poussoir 2 passe en position fermée par basculement (rotation) du poussoir 2 autour d'un axe longitudinal horizontal z, puis par translation du poussoir 2 suivant un axe vertical y. Lorsqu'un poussoir 2 est en position fermée, la paire de conducteurs insérée dans le poussoir 2 est connectée au dispositif 1. Le positionnement du poussoir 2 en position ouverte et basculée, c'est-à-dire inclinée et surélevée par rapport au poussoir 2 en position fermée, permet de mieux visualiser les logements, particulièrement si le dispositif 1 est situé en bas d'une armoire de répartition. Le basculement facilite ainsi l'insertion des conducteurs dans le poussoir 2.

Les poussoirs 2 sont associés à des contacts auto-dénudant 3 munis de fentes. Ainsi, lors de la translation du poussoir 2 vers sa position fermée, l'isolant de chaque conducteur s'arrache sur la fente du contact auto-dénudant 3 et les conducteurs sont ainsi connectés au contact 3.

Dans chaque poussoir 2, les entrées de guidage 2A sont de préférence situées à des hauteurs différentes. Ainsi, on ne cumule pas les efforts d'insertion des conducteurs dans les contacts auto-dénudants et les conducteurs sont connectés à des niveaux différents successivement, ce qui réduit l'effort de connexion.

Le dispositif selon l'invention permet ainsi de connecter efficacement des paires de conducteurs, et ce dans un espace réduit. Il peut être utilisé dans des armoires de sous-répartition d'un réseau de télécommunication. Le fait que les poussoirs puissent basculer en position haute permet de visualiser les entrées de conducteurs et ainsi de réaliser une connexion de qualité. Le fait que les entrées de conducteurs soient décalées permet de ne pas cumuler les efforts d'insertion des conducteurs.

## Revendications

1. Dispositif (1) de connexion de paires de conducteurs, comprenant une premier ensemble de zones de réception de paires de conducteurs et un deuxième ensemble de zones de réception de paires de conducteurs, ainsi que des moyens de liaison (3) aptes à relier chaque zone de réception du premier ensemble à une zone de réception du deuxième ensemble, **caractérisé en ce que** le dispositif (1) comprend des poussoirs (2) munis chacun d'une zone de réception de paires de conducteurs, les poussoirs (2) pouvant être en position fermée ou en position ouverte, les poussoirs (2) étant aptes à connecter leur zone de réception aux moyens de liaison (3) lorsqu'ils sont en position fermée et aptes à déconnecter leur zone de réception des moyens de liaison (3) lorsqu'ils sont en position ouverte, et **en ce que** le passage de la position ouverte à la position fermée s'effectue par rotation puis par translation des poussoirs (2).

2. Dispositif (1) selon la revendication 1, **caractérisé en ce que** le connexion des zones de réception aux moyens de liaison (3) s'effectue par translation des poussoirs (2).

3. Dispositif (1) selon la revendication 1 ou 2, **caractérisé en ce que** la position ouverture des poussoirs (2) est une position basculée, inclinée et surélevée par rapport à la position fermée des poussoirs (2).

4. Dispositif (1) selon l'une des revendications 1 à 3, **caractérisé en ce que** les zones de réception des poussoirs (2) appartiennent au premier ensemble et/ou au deuxième ensemble.

5. Dispositif (1) selon l'une des revendications 1 à 4, **caractérisé en ce que** les poussoirs (2) sont alignés suivant un axe longitudinal du dispositif (1), et **en ce que** le passage de la position ouverte à la position fermée s'effectue par rotation des poussoirs (2) autour d'un axe parallèle à l'axe longitudinal puis par translation des poussoirs (2) radialement à l'axe longitudinal.

6. Dispositif (1) selon l'une des revendications 1 à 5, **caractérisé en ce que** les moyens de liaison (3) sont des contacts auto-dénudant (3).

7. Dispositif (1) selon l'une des revendications 1 à 6, caractérisé en les poussoirs (2) comprennent des moyens de guidage (2A) des conducteurs vers les zones de réception.

8. Dispositif selon la revendication 7, **caractérisé en ce que** les moyens de guidage (2A) comprennent deux entrées (2A) de conducteurs situées à deux niveaux différents.

9. Armoire, **caractérisée en ce qu'**elle comprend au moins un dispositif (1) selon l'une des revendications 1 à 8.
